# EUROPÄISCHE PATENTSCHRIFT

(11) **EP 3 738 852 B1**
(45) Veröffentlichungstag und Bekanntmachung des Hinweises auf die Patenterteilung: **07.05.2025**
(21) Anmeldenummer: 20163719.6
(22) Anmeldetag: 17.03.2020
(51) Int. Cl.: B60W 30/12, B60W 50/08, B60T 8/1764, B60W 30/02, B60T 8/1755

(54) **UNTERSTÜTZUNG DES BEENDENS EINER BANKETTFAHRT EINES KRAFTFAHRZEUGS**
SUPPORT OF THE TERMINATION OF A VEHICLE DRIVING ONTO THE HARD SHOULDER
AIDE À LA FINALISATION DE LA CONDUITE D'UN VÉHICULE LE LONG DE L'ACCOTEMENT

(30) Priorität: 13.05.2019 DE 102019206882
(43) Veröffentlichungstag der Anmeldung: 18.11.2020
(73) Patentinhaber: VOLKSWAGEN AG, 38440 Wolfsburg (DE)
(72) Erfinder: Bartels, Arne, 38448 Wolfsburg (DE); Kolms, Thomas, 38553 Wasbüttel (DE); Klingemann, Timo, 38524 Sassenburg (DE); Krings, Robin, 50226 Frechen (DE); Sakpal, Amogh, 50321 Brühl (DE)

(56) Entgegenhaltungen:
- EP-A1- 1 995 136
- DE-A1- 10 244 204
- DE-A1- 10 357 254
- DE-A1- 102005 003 177
- DE-A1- 102011 082 567
- DE-A1- 102012 109 310
- DE-A1- 102015 217 783

## Beschreibung

Die vorliegende Erfindung betrifft ein Verfahren zum Beenden einer Bankettfahrt eines Kraftfahrzeugs, ein entsprechendes System und ein Computerprogramm.

Bei einer Bankettfahrt eines Kraftfahrzeugs, also einer Situation, bei der sich wenigstens ein Rad des Kraftfahrzeugs in einem Bankett neben einer Fahrbahn befindet und sich wenigstens ein gegenüberliegendes Rad auf der Fahrbahn befindet, liegt eine sogenannte µ-Split-Situation vor. Dabei steht µ für den Reibwert zwischen den jeweiligen Rädern und dem entsprechenden Untergrund. Beispielsweise befinden sich die linken Räder des Kraftfahrzeugs auf der Fahrbahn mit hohem Reibwert, beispielsweise Beton oder Asphalt, wohingegen sich die rechten Räder des Kraftfahrzeugs im Bankett mit niedrigem Reibwert befinden, beispielsweise Gras, Schotter oder Sand. Wenn der Fahrer des Kraftfahrzeugs diese Situation erkennt und versucht, das Fahrzeug zurück auf die Fahrbahn zu lenken, kann es vorkommen, dass der Fahrer übermäßige Lenk-, Brems- oder Beschleunigungsmanöver durchführt und in der Konsequenz die Kontrolle über das Kraftfahrzeug verliert oder weiter als beabsichtigt in Richtung der gegenüberliegenden Fahrbahnseite gerät. Dadurch können schwere Unfälle entstehen.

Bekannte Fahrerassistenzsysteme, wie beispielsweise ESC-Systeme, können nicht in jeder Situation, insbesondere wenn der Fahrer eine besonders intensive Reaktion zeigt, das Schleudern oder Übersteuern des Fahrzeugs verhindern. Auch optische Fahrerassistenzsysteme, die auf Kameras oder dergleichen basieren, können nicht unter allen Bedingungen Fahrstreifenmarkierungslinien oder Fahrbahnkanten erkennen, so dass auch diese nicht zuverlässig Unfälle aufgrund von Bankettfahrten verhindern können.

Im Dokument EP 1 350 707 A2 ist eine Vorrichtung zur Querführungsunterstützung bei Kraftfahrzeugen beschrieben. Dabei wird eine Ist-Position eines Fahrzeugs relativ zu den Grenzen der befahrenen Spur mit einem Soll-Wert verglichen. Basierend auf dem Vergleich wird ein Befehl zur Erzeugung eines den Fahrer bei seinen Lenkaktionen unterstützenden Lenkmoments ausgegeben. Gemäß der Vorrichtung soll insbesondere verhindert werden, dass der aktive Eingriff des Fahrers in die Fahrzeugsteuerung durch eine gegensinnige Wirkung des Querführungssystems gehemmt oder erschwert wird oder zu einer überschießenden Gegenreaktion oder Überreaktion führt. Das Querführungssystem passt sich daher einem intensiven Manöver des Fahrers an. DE102011082567A1, EP1995136A1, DE102005003177A1, und DE102012109310A1 helfen dem Fahrer beim Beenden einer Bankettfahrt.

Vor diesem Hintergrund ist es eine Aufgabe der vorliegenden Erfindung, ein verbessertes Konzept zum Beenden einer Bankettfahrt eines Kraftfahrzeugs anzugeben, mittels dem die Bankettfahrt zuverlässiger, schneller und sicherer beendet werden kann.

Erfindungsgemäß wird diese Aufgabe durch ein Verfahren sowie ein System und ein Computerprogramm nach den unabhängigen Ansprüchen gelöst. Vorteilhafte Weiterbildungen und Ausführungsformen sind Gegenstand der abhängigen Patentansprüche.

Das verbesserte Konzept beruht auf der Idee, eine Reaktion des Fahrers auf die Bankettfahrt gemäß ihrer Intensität zu klassifizieren und je nachdem, welcher Intensitätsklasse die Fahrerreaktion zugeordnet werden kann, einen der Fahrerreaktion entgegengesetzten oder einen die Fahrerreaktion unterstützenden Eingriff in die Fahrzeugsteuerung vorzunehmen. Gemäß einem ersten unabhängigen Aspekt des verbesserten Konzepts wird ein Verfahren zum Beenden einer Bankettfahrt eines Kraftfahrzeugs angegeben. Dabei wird mittels einer Detektionseinheit des Kraftfahrzeugs erkannt, dass sich ein Rad des Kraftfahrzeugs in einem Bankett befindet. Mittels einer Sensoreinheit des Kraftfahrzeugs wird eine Fahrerreaktion, insbesondere eine Fahrerreaktion auf das Vorliegen der Bankettfahrt, erfasst, und mittels einer Recheneinheit des Kraftfahrzeugs wird die Fahrerreaktion einer von wenigstens zwei Intensitätsklassen zugeordnet. Mittels einer Steuereinheit des Kraftfahrzeugs wird ein der Fahrerreaktion entgegengesetzter Eingriff in die Fahrzeugsteuerung vorgenommen, insbesondere ein automatischer oder vollautomatischer Eingriff, wenn die Fahrerreaktion einer ersten Intensitätsklasse der wenigstens zwei Intensitätsklassen zugeordnet wurde. Mittels der Steuereinheit wird ein die Fahrerreaktion unterstützender Eingriff in die Fahrzeugsteuerung, insbesondere automatisch oder vollautomatisch, vorgenommen, wenn die Fahrerreaktion einer zweiten Intensitätsklasse der wenigstens zwei Intensitätsklassen zugeordnet wurde.

Das Verfahren zum Beenden der Bankettfahrt kann insbesondere als Verfahren zur Unterstützung eines Fahrers beim Beenden der Bankettfahrt aufgefasst werden.

Der Eingriff in die Fahrzeugsteuerung kann insbesondere einen Eingriff in eine Lenkung, also das insbesondere automatische Durchführen eines Lenkmanövers mittels der Steuereinheit, beinhalten und/oder einen Eingriff in das Bremssystem des Kraftfahrzeugs, kann also insbesondere ein automatisch oder vollautomatisch durchgeführtes Bremsen, insbesondere einen Einzelradbremseingriff, beinhalten.

Unter einer Bankettfahrt eines Kraftfahrzeugs kann hier und im Folgenden verstanden werden, dass sich wenigstens ein Rad des Kraftfahrzeugs während einer Fahrt des Kraftfahrzeugs auf oder in einem Bankett befindet, während sich wenigstens ein weiteres Rad des Kraftfahrzeugs, insbesondere ein auf einer bezüglich des Rades gegenüberliegenden Seite des Kraftfahrzeugs befindliches weiteres Rad, nicht in dem Bankett, sondern insbesondere auf einer Fahrbahn befindet. Insbesondere befinden sich bei einem Kraftfahrzeug mit vier Rädern bei einer Bankettfahrt beispielsweise ein rechtes oder ein linkes Rad im Bankett, während sich alle anderen Räder auf der Fahrbahn befinden oder es befinden sich beide rechten Räder oder beide linken Räder im Bankett, während sich die übrigen beiden Räder jeweils auf der Fahrbahn befinden.

Unter einer Fahrbahn kann hier und im Folgenden ein befestigter Bereich verstanden werden, der für einen regulären Kraftfahrzeugverkehr vorgesehen ist, also insbesondere eine befestigte Straße, beispielsweise eine asphaltierte Straße, eine Betonstraße oder eine Pflasterstraße.

Unter einem Bankett kann hier und im Folgenden ein unbefestigter Bereich neben der Fahrbahn, insbesondere seitlich neben der Fahrbahn, verstanden werden. Das Bankett kann beispielsweise einen Rasenbelag, einen Schotterbelag, einen Schotterrasen oder einen anderen, nicht befestigten Belag aufweisen. Insbesondere unterscheidet sich eine Oberflächenbeschaffenheit des Banketts von der Oberflächenbeschaffenheit der Fahrbahn

Insbesondere unterscheiden sich jeweilige Reibwerte eines Rads des Kraftfahrzeugs auf der Fahrbahn beziehungsweise auf dem Bankett. Der Reibwert auf der Fahrbahn ist insbesondere höher als der Reibwert auf dem Bankett. Bei einer Bankettfahrt liegt dementsprechend eine sogenannte µ-Split-Situation vor.

Die Detektionseinheit kann beispielsweise ein Kamerasystem und/oder ein System zur Detektion einer Radbewegung des Kraftfahrzeugs beinhalten. Die Detektionseinheit kann auch ein System zur Detektion einer Fahrzeugzustandsgröße, wie beispielsweise einer Fahrzeugbeschleunigung, einer Gierrate, einer Raddrehzahl oder ein Sensorsystem zur Identifizierung einer Beschaffenheit der Fahrbahnoberfläche beinhalten. Damit kann die Detektionseinheit, insbesondere zusammen mit der Recheneinheit, einen Kennwert für eine Wahrscheinlichkeit dafür errechnen, dass sich wenigstens ein Rad des Kraftfahrzeugs im Bankett befindet. Beispielsweise kann dazu ein zeitlicher Verlauf der Raddrehzahl, eines Radschlupfs, einer Querbeschleunigung, einer Längsbeschleunigung und/oder einer Vertikalbeschleunigung des Kraftfahrzeugs, einer Gierrate des Kraftfahrzeugs, eines Einfederwegs eines oder mehrerer Räder des Kraftfahrzeugs oder einer Dämpferbeschleunigung eines oder mehrerer Dämpfer, insbesondere Raddämpfer, des Kraftfahrzeugs bestimmt werden.

Wenn die Detektionseinheit ein optisches System, ein optisches Sensorsystem, beispielsweise ein Kamerasystem oder ein Lidarsystem, oder ein Radarsystem aufweist, können damit beispielsweise eine Umgebung des Kraftfahrzeugs überwacht werden und eine Fahrbahnstreifenmarkierung, eine Fahrbahnkante oder andere Infrastrukturmerkmale in der Umgebung des Kraftfahrzeugs erkannt werden, und basierend darauf kann die Position des Kraftfahrzeugs lateral bezüglich der Fahrbahn oder der Fahrbahngrenzen bestimmt werden. Auch auf diese Weise kann das Vorliegen der Bankettfahrt detektiert werden.

Die Fahrerreaktion kann insbesondere ein manuelles Lenken, ein manuelles Bremsen oder ein manuelles Betätigen eines Antriebselements oder eines Fahrpedals zum Beschleunigen des Kraftfahrzeugs oder zum Antreiben des Kraftfahrzeugs beinhalten.

Die Fahrerreaktion wird einer der wenigstens zwei Intensitätsklassen zugeordnet, indem ein Kennwert für die Intensität der Fahrerreaktion bestimmt wird und die Zuordnung zu einer der beiden Intensitätsklassen basierend auf dem Kennwert erfolgt.

Erfindungsgemäß hängt die Intensität der Fahrerreaktion von einer Bremsintensität eines Bremsmanövers des Fahrers und/oder einer Intensität eines Betätigens eines Fahrerpedals durch den Fahrer ab. Zusätzlich kann die Intensität von der Lenkintensität abhängen. Die Lenkintensität kann beispielsweise von einem Wert des Lenkwinkels des Lenkmanövers, einer Lenkwinkelbeschleunigung und/oder einer Lenkwinkelgeschwindigkeit während des Lenkmanövers abhängen. Die Bremsintensität kann beispielsweise von einem Bremspedalweg bei dem Bremsmanöver, einer Bremspedalgeschwindigkeit bei dem Bremsmanöver und/oder von einem Bremsdruck bei dem Bremsmanöver abhängen.

Der der Fahrerreaktion entgegengesetzte Eingriff in die Fahrzeugsteuerung hat insbesondere eine Wirkung, welche einer Wirkung der Fahrerreaktion entgegengesetzt ist. Der entgegengesetzte Eingriff schwächt also insbesondere die Wirkung der Fahrerreaktion ab. Insbesondere wirkt der entgegengesetzte Eingriff derart, dass das Kraftfahrzeug in Richtung des Banketts bewegt wird oder eine Bewegung in Richtung der Fahrbahn abgeschwächt wird. Ein solcher der Fahrerreaktion entgegengesetzter Eingriff kann insbesondere als Stabilisierung bezeichnet werden.

Der die Fahrerreaktion unterstützende Eingriff in die Fahrzeugsteuerung hat insbesondere eine Wirkung, welche der Wirkung der Fahrerreaktion gleichgerichtet ist, insbesondere die Wirkung der Fahrerreaktion verstärkt. Insbesondere wirkt der unterstützende Eingriff derart, dass das Kraftfahrzeug in Richtung der Fahrbahn bewegt wird oder eine Bewegung des Kraftfahrzeugs in Richtung der Fahrbahn verstärkt wird. Ein solcher Eingriff kann insbesondere als Agilisierung bezeichnet werden.

Die Eingriffe in die Fahrzeugsteuerung, die mittels der Steuereinheit vorgenommen werden, können eine oder mehrere Aktionen beinhalten, beispielsweise eine oder mehrere Lenkaktionen, also Eingriffe in die Lenkung oder in das Lenksystem des Kraftfahrzeugs, und/oder eine Bremsaktion, also einen Eingriff in das Bremssystem des Kraftfahrzeugs.

Die Schritte des Erkennens, dass sich das Rad in dem Bankett befindet, des Erfassens der Fahrerreaktion, des Zuordnens der Fahrerreaktion einer der wenigstens zwei Intensitätsklassen sowie des Vornehmens des entgegengesetzten oder unterstützenden Eingriffs in die Fahrzeugsteuerung können beispielsweise iterativ wiederholt werden, bis mittels der Detektionseinheit erkannt wird, dass die Bankettfahrt beendet wurde, insbesondere, dass sich kein Rad des Kraftfahrzeugs mehr in dem Bankett befindet.

Gemäß einem Verfahren zum Beenden einer Bankettfahrt nach dem verbesserten Konzept können je nach Fahrerreaktion unterschiedlich wirkende automatische Korrekturen oder Eingriffe in die Fahrzeugsteuerung vorgenommen werden. Dass dies vorteilhaft ist, geht letztlich zurück auf das Vorliegen der µ-Split-Situation. Der Fahrer kann, beispielsweise wenn er das Vorliegen der Bankettfahrt erkennt, eine Überreaktion durch übermäßiges Lenken und/oder Bremsen als Fahrerreaktion vornehmen. In einem solchen Fall, welcher beispielsweise einer Fahrerreaktion der ersten Intensitätsklasse entspricht, kann mittels des Verfahrens anhand der Steuereinheit der entgegengesetzte Eingriff in die Fahrzeugsteuerung vorgenommen werden, um die Überreaktion des Fahrers abzuschwächen. Reagiert der Fahrer jedoch angemessen oder weniger intensiv als angemessen, kann es sinnvoll sein, den Fahrer durch den unterstützenden Eingriff in die Fahrzeugsteuerung zu agilisieren, also gemäß der zweiten Intensitätsklasse die Fahrerreaktion zu verstärken. Beide Situationen werden in einem Verfahren nach dem verbesserten Konzept abgedeckt und die Bankettfahrt jeweils möglichst schnell, sicher und zuverlässig beendet.

Insbesondere kann durch das verbesserte Konzept die Gefahr, welche von einer Überreaktion des Fahrers ausgeht, insbesondere ein Übersteuern des Kraftfahrzeugs oder ein Schleudern des Kraftfahrzeugs, reduziert werden. Bei einer angemessenen Reaktion des Fahrers kann nach dem verbesserten Konzept dagegen die Bankettfahrt besonders schnell und zuverlässig beendet werden.

Gemäß zumindest einer Ausführungsform des Verfahrens zum Beenden der Bankettfahrt nach dem verbesserten Konzept wird mittels der Recheneinheit eine Intensität der Fahrerreaktion bestimmt und die Fahrerreaktion abhängig von der bestimmten Intensität einer der wenigstens zwei Intensitätsklassen zugeordnet.

Gemäß zumindest einer Ausführungsform wird die Fahrerreaktion der ersten Intensitätsklasse zugeordnet, wenn die Intensität der Fahrerreaktion in einem ersten Intensitätsbereich liegt und der zweiten Intensitätsklasse zugeordnet, wenn die Fahrerreaktion in einem zweiten Intensitätsbereich liegt, wobei der erste Intensitätsbereich größeren Intensitäten entspricht als der zweite Intensitätsbereich.

Gemäß zumindest einer Ausführungsform wird mittels der Steuereinheit kein Eingriff in die Fahrzeugsteuerung vorgenommen, wenn die Fahrerreaktion einer dritten Intensitätsklasse der wenigstens zwei Intensitätsklassen zugeordnet wurde.

Beispielsweise kann die Fahrerreaktion der dritten Intensitätsklasse zugeordnet werden, wenn die Intensität der Fahrerreaktion in einem dritten Intensitätsbereich liegt, welcher kleineren Intensitäten entspricht als der zweite Intensitätsbereich.

Die Intensität der Fahrerreaktion kann beispielsweise in dem dritten Intensitätsbereich liegen, wenn der Fahrer nicht reagiert, insbesondere nicht versucht, das Kraftfahrzeug aus dem Bankett zu lenken.

Dadurch, dass in einem solchen Fall kein automatischer Eingriff in die Fahrzeugsteuerung vorgenommen wird, was für den Fahrer überraschend sein könnte, wird die Sicherheit erhöht.

Gemäß zumindest einer Ausführungsform wird mittels der Steuereinheit ein Warnsignal ausgegeben, wenn die Fahrerreaktion der dritten Intensitätsklasse zugeordnet wurde.

Mittels des Warnsignals kann der Fahrer beispielsweise auf das Vorliegen der Bankettfahrt hingewiesen werden, damit er Maßnahmen zum Verlassen des Banketts einleitet.

Gemäß zumindest einer Ausführungsform wird mittels der Steuereinheit ein Einzelradbremseingriff an dem sich in dem Bankett befindenden Rad als der der Fahrerreaktion entgegengesetzte Eingriff vorgenommen, wenn die Fahrerreaktion der ersten Intensitätsklasse zugeordnet wurde.

Durch den Einzelradbremseingriff an dem Rad, welches sich im Bankett befindet, wird das Gierverhalten bezogen auf die manuelle Lenkaktion des Fahrers reduziert. Ein Seitenkraftpotential des Rads, welches sich im Bankett befindet, kann ebenfalls reduziert werden. Dadurch kann ein Seitenkraftsprung, welcher aufgrund der µ-Split-Situation auftritt, wenn das sich im Bankett befindende Rad wieder auf die Fahrbahn zurückkehrt, abgemildert werden. Schließlich werden beispielsweise ein Giermoment oder ein Querbeschleunigungssprung bei Erreichen der Fahrbahn durch das Rad, welches sich in dem Bankett befindet, reduziert. In der Konsequenz bleibt das Kraftfahrzeug besser kontrollierbar, und ein instabiles Fahrverhalten kann vermieden werden.

Gemäß zumindest einer Ausführungsform wird mittels der Steuereinheit ein Lenkeingriff in eine Richtung zu dem Bankett hin als der der Fahrerreaktion entgegengesetzte Eingriff automatisch vorgenommen, wenn die Fahrerreaktion der ersten Intensitätsklasse zugeordnet wurde.

Durch den Lenkeingriff hin zu dem Bankett wird ein Übersteuern des Kraftfahrzeugs durch den Fahrer reduziert, abgemildert oder vermieden.

Gemäß zumindest einer Ausführungsform wird mittels der Steuereinheit ein Einzelradbremseingriff automatisch an einem weiteren Rad des Kraftfahrzeugs durchgeführt, wobei sich das weitere Rad nicht in dem Bankett befindet, um den die Fahrerreaktion unterstützenden Eingriff vorzunehmen, wenn die Fahrerreaktion der zweiten Intensitätsklasse zugeordnet wurde.

Dabei handelt es sich insbesondere um einen einlenkenden Einzelradbremseingriff. Durch diesen wird das Gierverhalten bezogen auf die Lenkreaktion des Fahrers erhöht, und einer möglichen Überreaktion des Fahrers wird schon vorab entgegengewirkt.

Gemäß zumindest einer Ausführungsform wird mittels der Steuereinheit ein Lenkeingriff in eine Richtung von dem Bankett weg als der die Fahrerreaktion unterstützende Eingriff vorgenommen, wenn die Fahrerreaktion der zweiten Intensitätsklasse zugeordnet wurde. Dadurch kann die Bankettfahrt insbesondere schneller beendet werden.

Erfindungsgemäß wird wenigstens ein Intensitätskennwert der Fahrerreaktion mittels der Recheneinheit bestimmt. Die Zuordnung der Fahrerreaktion in die eine von wenigstens zwei Intensitätsklassen wird mittels der Recheneinheit in Abhängigkeit von dem wenigstens einen Intensitätskennwert durchgeführt.

Erfindungsgemäß wird eine Bremsintensität eines Bremsmanövers des Fahrers und/oder eine Beschleunigungsintensität eines Beschleunigungsmanövers des Fahrers bestimmt und alternativ zusätzlich zu diesen drei Optionen eine Lenkintensität eines Lenkmanövers des Fahrers bestimmt, um den Intensitätskennwert zu bestimmen.

Um die Lenkintensität zu bestimmen, können beispielsweise eine Lenkwinkelgeschwindigkeit und/oder ein Wert des Lenkwinkels während eines vorgegebenen Zeitintervalls bestimmt werden. Um die Bremsintensität zu bestimmen, können beispielsweise ein Bremsdruck, ein Bremspedalweg, eine Bremspedalgeschwindigkeit und/oder eine Bremspedalbeschleunigung bestimmt werden, insbesondere während dem vorgegebenen Zeitintervall.

Um die Beschleunigungsintensität, beziehungsweise die Intensität der beabsichtigten Beschleunigung, zu bestimmen, können beispielsweise ein Fahrpedalweg, ein Fahrpedaldruck, eine Fahrpedalbeschleunigung und/oder eine Fahrpedalgeschwindigkeit bestimmt werden.

Gemäß einem weiteren unabhängigen Aspekt des verbesserten Konzepts wird ein System zum Beenden einer Bankettfahrt eines Kraftfahrzeugs angegeben, wobei das System eine Detektionseinheit beinhaltet, die dazu eingerichtet ist, zu erkennen, dass sich ein Rad des Kraftfahrzeugs in einem Bankett befindet. Das System weist eine Sensoreinheit auf, die dazu eingerichtet ist, eine Fahrerreaktion zu erfassen und eine Recheneinheit, die dazu eingerichtet ist, die Fahrerreaktion einer von wenigstens zwei Intensitätsklasse zuzuordnen. Das System weist eine Steuereinheit auf, die dazu eingerichtet ist, einen der Fahrerreaktion entgegengesetzten Eingriff in die Fahrzeugsteuerung zu veranlassen, wenn die Fahrerreaktion einer ersten Intensitätsklasse der wenigstens zwei Intensitätsklassen zugeordnet wurde. Die Steuereinheit ist dazu eingerichtet, einen die Fahrerreaktion unterstützenden Eingriff in die Fahrzeugsteuerung zu veranlassen, wenn die Fahrerreaktion einer zweiten Intensitätsklasse der wenigstens zwei Intensitätsklassen zugeordnet wurde.

Weitere Ausführungsformen des Systems zum Beenden der Bankettfahrt folgen unmittelbar aus den verschiedenen Ausgestaltungen und Ausführungsformen des Verfahrens zum Beenden der Bankettfahrt nach dem verbesserten Konzept und umgekehrt. Insbesondere ist ein System zum Beenden einer Bankettfahrt nach dem verbesserten Konzept dazu eingerichtet oder programmiert, ein Verfahren zum Beenden einer Bankettfahrt nach dem verbesserten Konzept durchzuführen, oder ein System nach dem verbesserten Konzept führt ein Verfahren nach dem verbesserten Konzept durch.

Gemäß einem weiteren unabhängigen Aspekt des verbesserten Konzepts wird ein Computerprogramm mit Befehlen angegeben, welche bei Ausführungen des Computerprogramms durch ein System zum Beenden einer Bankettfahrt nach dem verbesserten Konzept, insbesondere durch eine Recheneinheit des Systems, das System dazu veranlassen, ein Verfahren zum Beenden einer Bankettfahrt nach dem verbesserten Konzept durchzuführen.

Gemäß einem weiteren unabhängigen Aspekt des verbesserten Konzepts wird ein computerlesbares Speichermedium angegeben, auf welchem ein Computerprogramm nach dem verbesserten Konzept gespeichert ist.

Gemäß einem weiteren unabhängigen Aspekt des verbesserten Konzepts wird ein Kraftfahrzeug angegeben, welches ein System zum Beenden einer Bankettfahrt nach dem verbesserten Konzept und/oder ein computerlesbares Speichermedium nach dem verbesserten Konzept beinhaltet.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Systems beschrieben worden sind. Aus diesem Grund sind die entsprechenden Weiterbildungen des erfindungsgemäßen Verfahrens gegebenenfalls nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigen:
- Fig. 1: eine schematische Darstellung eines Kraftfahrzeugs mit einer beispielhaften Ausführungsform eines Systems nach dem verbesserten Konzept;
- Fig. 2: ein Ablaufdiagramm einer beispielhaften Ausführungsform eines Verfahrens nach dem verbesserten Konzept.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

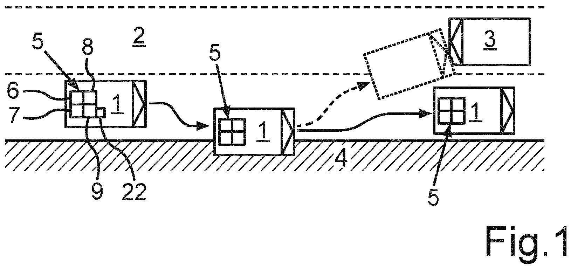

In Fig. 1 ist ein Kraftfahrzeug 1 gezeigt, welches ein System 5 zum Beenden einer Bankettfahrt nach dem verbesserten Konzept beinhaltet.

Das Kraftfahrzeug 1 befindet sich links in Fig. 1 auf einer Fahrbahn 2, welche beispielsweise auf einer rechten Seite des Kraftfahrzeugs 1 durch ein Bankett 4 begrenzt ist. In der mittleren Abbildung von Fig. 1 befinden sich die rechten Räder des Kraftfahrzeugs 1 in dem Bankett, während sich die linken Räder des Kraftfahrzeugs 1 nach wie vor auf der Fahrbahn 2 befinden, so dass eine Bankettfahrt vorliegt. Im rechten Bild der Fig. 1 ist unten das Kraftfahrzeug 1 gezeigt, welches nach einem Verfahren zum Beenden einer Bankettfahrt gemäß dem verbesserten Konzept wieder vollständig auf der Fahrbahn 2 fährt. Oben in der rechten Abbildung der Fig. 1 ist ein weiteres Kraftfahrzeug 3 gezeigt, welches in einer der Fahrtrichtung des Kraftfahrzeugs 1 entgegengesetzten Richtung auf der Fahrbahn 2 fährt. Im Falle einer übermäßig starken Reaktion eines Fahrers des Kraftfahrzeugs 1, insbesondere ohne dass ein Verfahren oder ein System nach dem verbesserten Konzept zum Einsatz kommt, kann dies dazu führen, dass das Kraftfahrzeug 1 auf die Gegenfahrbahn gerät und mit dem weiteren Kraftfahrzeug 3 kollidiert, wie gestrichelt angedeutet.

Das System 5 zum Beenden der Bankettfahrt beinhaltet eine Detektionseinheit 6, eine Sensoreinheit 7, eine Recheneinheit 8 und eine Steuereinheit 9. Optional kann das System 5 ein computerlesbares Speichermedium 22 beinhalten, auf welchem ein Computerprogramm nach dem verbesserten Konzept gespeichert sein kann und welches mittels der Recheneinheit 8 ausgeführt werden kann, um ein Verfahren nach dem verbesserten Konzept durchzuführen.

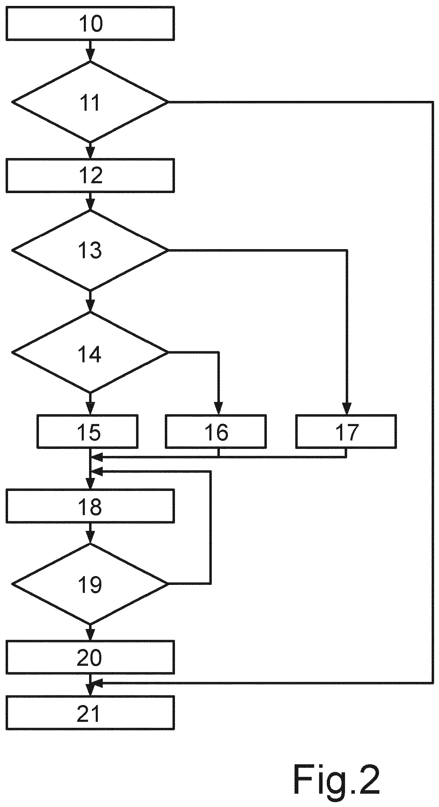

Die Funktionsweise des Systems 5 wird nun anhand von Fig. 2 näher erläutert.

In Fig. 2 ist ein Ablaufdiagramm einer beispielhaften Ausführungsform eines Verfahrens zum Beenden einer Bankettfahrt nach dem verbesserten Konzept dargestellt, welches beispielsweise durch ein System 5 eines Kraftfahrzeugs 1, wie es in Fig. 1 dargestellt ist, durchgeführt werden kann.

Fährt das Kraftfahrzeug 1 mit den linken oder den rechten Rädern im Bankett 4, wie beispielsweise in der Mitte von Fig. 1 dargestellt, kann das System 5 ein mehrstufiges Verfahren zur Unterstützung des Fahrers bei der Rückführung des Kraftfahrzeugs 1 aus dem Bankett 4 durchführen, insbesondere zur Vermeidung eines kritischen Zustands des Kraftfahrzeugs.

Das System 5 kann dabei den Fahrer insbesondere beim Herauslenken aus dem Bankett 4 durch einen Eingriff in die Fahrzeugsteuerung des Kraftfahrzeugs 1 unterstützen. Die Art des Eingriffs hängt dabei insbesondere von der Art und Weise, insbesondere von der Intensität, einer Fahrerreaktion ab. Erfolgt eine Überreaktion des Fahrers, beispielsweise durch einen sehr starken Lenkeingriff und/oder einen Bremseingriff verbunden mit einem starken Lenkeingriff, kann das System 5 das Fahrzeugverhalten durch einen der Fahrerreaktion entgegengesetzten Eingriff stabilisieren. Erfolgt keine Überreaktion des Fahrers, sondern beispielsweise ein maßvoller Lenk- und/oder Bremseingriff, bei dem keine instabile Fahrzeugreaktion zu erwarten ist, dann kann mittels des Systems 5 ein die Fahrerreaktion unterstützender, also agilisierender, Eingriff in die Fahrzeugsteuerung vorgenommen werden.

In Schritt 10 des Verfahrens kann mittels der Detektionseinheit 6 beispielsweise geprüft werden, ob sich ein Rad des Kraftfahrzeugs 1 in dem Bankett 4 befindet. In Schritt 11 wird ermittelt, ob die Detektionseinheit 6 ein Vorliegen der Bankettfahrt erkannt hat. Ist dies nicht der Fall, wird mit Schritt 21 des Verfahrens weiterverfahren, und eine Normalfahrt des Kraftfahrzeugs 1 wird ohne weitere Aktion des Systems 5 fortgeführt.

Liegt, wie in der Mitte von Fig. 1 gezeigt, eine Bankettfahrt vor, so wird in Schritt 12 des Verfahrens mittels der Sensoreinheit 7 eine Reaktion des Fahrers, also eine Fahrerreaktion, ermittelt. In Schritt 13 des Verfahrens kann beispielsweise mittels der Recheneinheit, insbesondere abhängig von einem oder mehreren Ausgangssignalen der Sensoreinheit 7, geprüft werden, ob der Fahrer Maßnahmen ergriffen hat, um das Kraftfahrzeug 1 aus dem Bankett 4 zu lenken.

Ist dies der Fall, nimmt der Fahrer insbesondere ein manuelles Lenkmanöver vor, wird in Schritt 14 geprüft, ob eine Überreaktion oder eine zu hohe Intensität der Fahrerreaktion vorliegt. Ist dies der Fall, was beispielsweise durch ein starkes Bremsmanöver in Kombination mit einem Lenkmanöver des Fahrers erkannt werden kann, wird die Fahrerreaktion einer ersten Intensitätsklasse zugeordnet. Entsprechend wird in Schritt 15 des Verfahrens beispielsweise automatisch durch die Steuereinheit 9 ein Einzelradbremseingriff an mindestens einem der sich im Bankett 4 befindlichen Räder zur Reduzierung des Gierverhaltens bezogen auf das Lenkmanöver des Fahrers durchgeführt. Dadurch wird das Seitenkraftpotential der Reifen im Bankett durch die Bremskraft reduziert und somit ein Seitenkraftsprung abgemildert. Ein Giermoment beziehungsweise ein Gierbeschleunigungssprung beim Erreichen der befestigten Fahrbahn 2 wird reduziert. Das Kraftfahrzeug 1 bleibt jedoch kontrollierbar und ein instabiles Fahrverhalten kann vermieden werden. Alternativ oder ergänzend kann in Schritt 15 auch automatisch durch die Steuereinheit 9 ein Lenkeingriff zum Bankett 4 hin lenkend erfolgen. Hierzu kann die Steuereinheit 9 beispielsweise ein Lenkmoment oder einen Lenkwinkel auf ein Lenksystem des Kraftfahrzeugs 1 aufprägen. Ist eine für den Fahrer spürbare Lenkbewegung beziehungsweise ein spürbares Lenkmoment nicht erwünscht, dann kann alternativ ein Steer-by-Wire-Lenksystem genutzt werden, welches ein Lenken der Räder ohne eine Bewegung des Lenkrads ermöglicht. Dies hat den Vorteil, dass beispielsweise bei einem ABS-Eingriff während der Bankettfahrt dieser ohne weitere Bremseingriffe des Systems 5 fortgesetzt werden kann. Potentielle Konfliktfälle mit dem ABS-System können somit vermieden werden. Die in Schritt 15 vorgenommene Stabilisierung wird in Schritt 18 fortgesetzt, beispielsweise bis das Kraftfahrzeug 1 das Bankett 4 verlassen hat. Dies wird beispielsweise in Schritt 19 geprüft. Die Schritte 18 und 19 können iterativ durchgeführt werden. Hat das Kraftfahrzeug 1 das Bankett 4 verlassen, so wird die Stabilisierung in Schritt 20 beendet und in Schritt 21 die Normalfahrt fortgesetzt.

Wird in Schritt 14 festgestellt, dass eine Überreaktion des Fahrers nicht vorliegt, dass also insbesondere ein angemessenes Lenk- und Bremsmanöver des Fahrers vorliegt, so wird die Fahrerreaktion der zweiten Intensitätsklasse zugeordnet. Entsprechend wird in Schritt 16 beispielsweise ein einlenkender Einzelradbremseingriff automatisch durch die Steuereinheit 9 an einem sich auf der Fahrbahn 2 befindlichen Rad des Kraftfahrzeugs 1 zur Unterstützung der Fahrerreaktion durchgeführt. Dadurch wird das Gierverhalten bezogen auf das Lenkmanöver des Fahrers erhöht, was das Verlassen des Banketts 4 unterstützen kann. Insbesondere wird dadurch einer möglichen Überreaktion des Fahrers bereits vorab entgegengewirkt, die aufgrund des unerwartet reduzierten Gierverhaltens in Folge der µ-Split-Situation auftreten kann. Alternativ oder zusätzlich dann die Rückführung vom Bankett 4 auf die Fahrbahn 2 durch einen Lenkeingriff zur Fahrbahn 2 hin erfolgen. Auch hierzu kann entsprechend wiederum ein Lenkmoment oder ein Lenkwinkel auf das Lenksystem des Kraftfahrzeugs 1 aufgeprägt werden. Auch hier kann ein Steer-by-Wire-Lenksystem genutzt werden. Die in Schritt 16 vorgenommene Agilisierung wird in Schritt 18 fortgesetzt, solange bis das Kraftfahrzeug 1 das Bankett 4 verlassen hat, was in den Schritten 18 und 19 iterativ geprüft wird. Wird in Schritt 19 festgestellt, insbesondere mittels der Detektionseinheit 6, dass das Kraftfahrzeug 1 das Bankett 4 verlassen hat, so wird die Agilisierung in Schritt 20 beendet und in Schritt 21 die Normalfahrt des Kraftfahrzeugs 1 fortgesetzt.

Wird in Schritt 13 festgestellt, dass der Fahrer keine Maßnahmen zum Verlassen des Banketts 4 eingeleitet hat, also insbesondere kein oder ein nur sehr schwaches Lenkmanöver durchführt, so wird die Fahrerreaktion einer dritten Intensitätsklasse zugeordnet. Entsprechend wird in Schritt 17 beispielsweise mittels der Recheneinheit 8 oder der Steuereinheit 9 ein Warnsignal an den Fahrer ausgegeben. Der Fahrer wird dadurch darauf hingewiesen, dass er im Bankett 4 fährt. Zur Fahrerwarnung kann beispielsweise ein akustisches Warnsignal, ein optisches Warnsignal, beispielsweise in Form eines Lichtsignals oder einer Textmeldung, oder ein haptisches Warnsignal, beispielsweise in Form einer Lenkradvibration oder eines Lenkmoments, genutzt werden, um dem Fahrer eine entsprechende Rückmeldung zu geben. Auch eine Kombination solcher Warnsignale kann eingesetzt werden.

Die Warnung kann je nach Fahrerreaktion mehrstufig sein. Dabei können in verschiedenen Stufen der Warnung eine unterschiedliche Intensität des Warnsignals oder unterschiedliche Warnsignaltypen eingesetzt werden. Die Warnung wird fortgesetzt bis das Kraftfahrzeug 1 das Bankett 4 verlassen hat, was in Schritt 19 mittels der Detektionseinheit 6 festgestellt wird. Hat das Kraftfahrzeug 1 das Bankett 4 verlassen, so wird in Schritt 20 die Warnung beendet und in Schritt 21 die Normalfahrt fortgesetzt.

Die beschriebenen mehrstufigen Strategien zur Stabilisierung, Agilisierung und Warnung unterstützen den Fahrer im Falle eines Abkommens von der Fahrbahn bei der Rückführung aus dem Bankett zur Fortsetzung der Normalfahrt. Radselektive Bremseingriffe können nach dem verbesserten Konzept beispielsweise mit Bremseingriffen anderer Funktionen, beispielsweise anderer Fahrerassistenzsysteme, arbitriert werden. Wenn der Fahrer beispielsweise beim Verlassen des Banketts gleichzeitig stark bremst, dann kann beispielsweise an allen vier Rädern des Kraftfahrzeugs gebremst werden. Um das Kraftfahrzeug zu stabilisieren beziehungsweise zu agilisieren, kann es in dieser Situation erforderlich sein, eine Bremswirkung an den kurveninneren oder an den kurvenäußeren Rädern zu reduzieren. Kommt es während der Bankettfahrt zu einer Notbremssituation und ist eine Kollision beispielsweise unvermeidlich, kann ein Bremseingriff zum Zweck der Stabilisierung oder Agilisierung, um das Bankett zu verlassen, unterbleiben, um einer Notbremsung nicht entgegenzuwirken.

Das Abkommen eines Fahrzeugs von der Fahrbahn in den unbefestigten Seitenraum kann Grund für viele schwere Unfälle im Straßenverkehr sein. Beim Versuch, das Fahrzeug zurück auf die Fahrbahn zu führen, kann diese kritische Fahrsituation insbesondere durch starke und/oder schnelle Eingriffe in die Lenkung und/oder Bremse durch den Fahrer verschärft werden. Kommt das Fahrzeug mit den Rädern einer Fahrzeugseite nämlich in das Bankett neben der Fahrbahn, und der Fahrer des Kraftfahrzeugs versucht, das Fahrzeug wieder zurück auf die Fahrbahn zu führen, dann fährt das Vorderrad zuerst vom Bankett auf die Fahrbahn. Dadurch erfährt dieses vordere Rad beim Übergang vom Bankett zur befestigten Fahrbahn einen Reibwertsprung, der zu einem Seitenkraftsprung und damit zu einem Giermomentensprung führt. Erfahren Vorder- und Hinterrad zeitgleich den Übergang vom Bankett zur befestigten Fahrbahn, dann tritt ein Querbeschleunigungssprung auf. Das Fahrzeug erfährt in beiden Fällen eine hohe Querbeschleunigung. Wenn der Fahrer in dieser Situation stark lenkt und gegebenenfalls auch gleichzeitig noch bremst, dann können die Vorderachse des Kraftfahrzeugs weiter belastet und die Hinterachse entlastet werden, was den Effekt des Giermomentensprungs noch verstärken kann.

Dieses vom Fahrer unerwartete Fahrverhalten des Kraftfahrzeugs und der einhergehende hohe Schwimmwinkel können beispielsweise dazu führen, dass das Fahrzeug nicht, wie vom Fahrer beabsichtigt, stabil auf die originäre Fahrspur zurückgeführt wird, sondern weiter als beabsichtigt eindreht und übersteuert und in die Spur von überholten Fahrzeugen oder in den Gegenverkehr gerät oder aber in den Straßengraben auf der gegenüberliegenden Seite fährt. Dieser Kontrollverlust kann zu schweren Unfällen führen. Mittels eines Verfahrens und eines Systems zum Beenden einer Bankettfahrt nach dem verbesserten Konzept können solche Unfälle, wie beschrieben, vermieden werden.

### Bezugszeichenliste

- 1: Kraftfahrzeug
- 2: Fahrbahn
- 3: Kraftfahrzeug
- 4: Bankett
- 5: System
- 6: Detektionseinheit
- 7: Sensoreinheit
- 8: Recheneinheit
- 9: Steuereinheit
- 10 bis 21: Verfahrensschritte
- 22: Speichermedium

## Patentansprüche

1. Verfahren zum Beenden einer Bankettfahrt eines Kraftfahrzeugs (1), wobei
- mittels einer Detektionseinheit (6) des Kraftfahrzeugs (1) erkannt wird, dass sich ein Rad des Kraftfahrzeugs (1) in einem Bankett (4) befindet; und
- mittels einer Sensoreinheit (7) des Kraftfahrzeugs (1) eine Fahrerreaktion erfasst wird;
- **dadurch gekennzeichnet, dass** mittels einer Recheneinheit (8) des Kraftfahrzeugs (1) die Fahrerreaktion einer von wenigstens zwei Intensitätsklassen zugeordnet wird, wobei wenigstens ein Intensitätskennwert der Fahrerreaktion mittels der Recheneinheit (8) bestimmt wird und die Zuordnung der Fahrerreaktion in die eine von wenigstens zwei Intensitätsklassen in Abhängigkeit von dem wenigstens einen Intensitätskennwert durchgeführt wird und mittels der Recheneinheit (8) eine Bremsintensität eines Bremsmanövers eines Fahrers und/oder eine Beschleunigungsintensität eines beabsichtigten Beschleunigungsmanövers des Fahrers bestimmt wird, um den Intensitätskennwert zu bestimmen;
- mittels einer Steuereinheit (9) des Kraftfahrzeugs (1)
- ein der Fahrerreaktion entgegengesetzter Eingriff in eine Fahrzeugsteuerung vorgenommen wird, wenn die Fahrerreaktion einer ersten Intensitätsklasse der wenigstens zwei Intensitätsklassen zugeordnet wurde; und
- ein die Fahrerreaktion unterstützender Eingriff in die Fahrzeugsteuerung vorgenommen wird, wenn die Fahrerreaktion einer zweiten Intensitätsklasse der wenigstens zwei Intensitätsklassen zugeordnet wurde.

2. Verfahren nach Anspruch 1,
**dadurch gekennzeichnet, dass**
mittels der Steuereinheit (9) kein Eingriff in die Fahrzeugsteuerung vorgenommen wird, wenn die Fahrerreaktion einer dritten Intensitätsklasse der wenigstens zwei Intensitätsklassen zugeordnet wurde.

3. Verfahren nach Anspruch 2,
**dadurch gekennzeichnet, dass**
mittels der Steuereinheit (9) ein Warnsignal ausgegeben wird, wenn die Fahrerreaktion der dritten Intensitätsklasse zugeordnet wurde.

4. Verfahren nach einem der Ansprüche 1 bis 3,
**dadurch gekennzeichnet, dass**
mittels der Steuereinheit (9) ein Einzelradbremseingriff an dem sich in dem Bankett (4) befindenden Rad als der der Fahrerreaktion entgegengesetzte Eingriff vorgenommen wird, wenn die Fahrerreaktion der ersten Intensitätsklasse zugeordnet wurde.

5. Verfahren nach einem der Ansprüche 1 bis 4,
**dadurch gekennzeichnet, dass**
mittels der Steuereinheit (9) ein Lenkeingriff in eine Richtung zu dem Bankett (4) hin als der der Fahrerreaktion entgegengesetzte Eingriff vorgenommen wird, wenn die Fahrerreaktion der ersten Intensitätsklasse zugeordnet wurde.

6. Verfahren nach einem der Ansprüche 1 bis 5,
**dadurch gekennzeichnet, dass**
mittels der Steuereinheit (9) ein Einzelradbremseingriff an einem weiteren Rad des Kraftfahrzeugs (1), welches sich nicht in dem Bankett (4) befindet, als der die Fahrerreaktion unterstützende Eingriff vorgenommen wird, wenn die Fahrerreaktion der zweiten Intensitätsklasse zugeordnet wurde.

7. Verfahren nach einem der Ansprüche 1 bis 6,
**dadurch gekennzeichnet, dass**
mittels der Steuereinheit (9) ein Lenkeingriff in eine Richtung von dem Bankett (4) weg als der die Fahrerreaktion unterstützende Eingriff vorgenommen wird, wenn die Fahrerreaktion der zweiten Intensitätsklasse zugeordnet wurde.

8. System zum Beenden einer Bankettfahrt eines Kraftfahrzeugs (1), wobei das System (5)
- eine Detektionseinheit (6) beinhaltet, dazu eingerichtet, zu erkennen, dass sich ein Rad des Kraftfahrzeugs (1) in einem Bankett (4) befindet; und
- eine Sensoreinheit (7) beinhaltet, dazu eingerichtet, eine Fahrerreaktion zu erfassen;
- **dadurch gekennzeichnet, dass** das System eine Recheneinheit (8) beinhaltet, dazu eingerichtet, die Fahrerreaktion einer von wenigstens zwei Intensitätsklassen zuzuordnen, wobei die Recheneinheit (8) dazu eingerichtet ist, wenigstens einen Intensitätskennwert der Fahrerreaktion zu bestimmen und die Zuordnung der Fahrerreaktion in die eine von wenigstens zwei Intensitätsklassen in Abhängigkeit von dem wenigstens einen Intensitätskennwert durchzuführen und eine Bremsintensität eines Bremsmanövers eines Fahrers und/oder eine Beschleunigungsintensität eines beabsichtigten Beschleunigungsmanövers des Fahrers zu bestimmen, um den Intensitätskennwert zu bestimmen; und
- eine Steuereinheit (9) beinhaltet, dazu eingerichtet,
- einen der Fahrerreaktion entgegengesetzten Eingriff in eine Fahrzeugsteuerung zu veranlassen, wenn die Fahrerreaktion einer ersten Intensitätsklasse der wenigstens zwei Intensitätsklassen zugeordnet wurde; und
- einen die Fahrerreaktion unterstützenden Eingriff in die Fahrzeugsteuerung zu veranlassen, wenn die Fahrerreaktion einer zweiten Intensitätsklasse der wenigstens zwei Intensitätsklassen zugeordnet wurde.

9. Computerprogramm mit Befehlen, die, bei Ausführung des Computerprogramms durch ein System (5) nach Anspruch 8, insbesondere durch eine Recheneinheit (8) des Systems (5), das System (5) dazu veranlassen, ein Verfahren nach einem der Ansprüche 1 bis 7 durchzuführen.

## Claims

1. Method for stopping a motor vehicle (1) from driving on a shoulder,
wherein
- a detection unit (6) of the motor vehicle (1) detects that a wheel of the motor vehicle (1) is located on a shoulder (4); and
- a sensor unit (7) of the motor vehicle (1) is used to detect a driver's response;
- **characterized in that** a computing unit (8) of the motor vehicle (1) is used to assign the driver's response to one of at least two intensity classes, wherein at least one intensity characteristic value of the driver's response is determined by means of the computing unit (8), and the driver's response is assigned to the one of at least two intensity classes as a function of the at least one intensity characteristic value, and the computing unit (8) is used to determine a braking intensity of a braking maneuver of a driver and/or an acceleration intensity of an intended acceleration maneuver of the driver in order to determine the intensity characteristic value;
- by means of a computing unit (9) of the motor vehicle (1),
- a vehicle control intervention that is opposite to the driver's response is carried out if the driver's response has been assigned to a first intensity class of the at least two intensity classes; and
- a vehicle control intervention assisting the driver's response is carried out if the driver's response has been assigned to a second one of the at least two intensity classes.

2. Method according to claim 1,
**characterized in that**
no vehicle control intervention is carried out by means of the control unit (9) if the driver's response has been assigned to a third intensity class of the at least two intensity classes.

3. Method according to claim 2,
**characterized in that**
a warning signal is issued by the control unit (9) if the driver's response has been assigned to the third intensity class.

4. Method according to any of claims 1 to 3,
**characterized in that,**
by means of the control unit (9), an individual wheel brake intervention is carried out on the wheel located on the shoulder (4) as the intervention opposite to the driver's response if the driver's response has been assigned to the first intensity class.

5. Method according to any of claims 1 to 4,
**characterized in that**
a steering intervention is carried out by means of the control unit (9) towards the shoulder (4) as the intervention opposite to the driver's response if the driver's response has been assigned to the first intensity class.

6. Method according to any of claims 1 to 5,
**characterized in that,**
by means of the control unit (9), an individual wheel brake intervention is carried out on another wheel of the motor vehicle (1), which is not located in the shoulder (4), as the intervention assisting the driver's response if the driver's response has been assigned to the second intensity class.

7. Method according to any of claims 1 to 6,
**characterized in that**
a steering intervention is carried out by means of the control unit (9) in a direction away from the shoulder (4) as the intervention assisting the driver's response if the driver's response has been assigned to the second intensity class.

8. System for stopping a motor vehicle (1) from driving on a shoulder,
wherein the system (5)
- includes a detection unit (6) configured to detect that a wheel of the motor vehicle (1) is located on a shoulder (4); and
- includes a sensor unit (7) configured to detect a driver's response;
- **characterized in that** the system includes a computing unit (8) configured to assign the driver's response to one of at least two intensity classes, wherein the computing unit (8) is configured to determine at least one intensity characteristic value of the driver's response and to carry out the assignment of the driver's response to the one of at least two intensity classes as a function of the at least one intensity characteristic value, and to determine a braking intensity of a braking maneuver of a driver and/or an acceleration intensity of an intended acceleration maneuver of the driver in order to determine the intensity characteristic value; and
- includes a control unit (9) configured to
- initiate a vehicle control intervention that is opposite to the driver's response if the driver's response has been assigned to a first intensity class of the at least two intensity classes; and
- initiate a vehicle control intervention assisting the driver's response if the driver's response has been assigned to a second one of the at least two intensity classes.

9. Computer program having instructions which, when the computer program is run by a system (5) according to claim 8, in particular by a computing unit (8) of the system (5), cause the system (5) to carry out a method according to any of claims 1 to 7.

## Revendications

1. Procédé permettant de mettre fin à une conduite sur accotement d'un véhicule automobile (1),
dans lequel
- on détecte au moyen d'une unité de détection (6) du véhicule automobile (1) qu'une roue du véhicule automobile (1) se trouve dans un accotement (4) ; et
- une réaction côté conducteur est captée au moyen d'une unité formant capteur (7) du véhicule automobile (1) ;
- **caractérisé en ce que**
la réaction côté conducteur est attribuée à l'une parmi au moins deux classes d'intensité par une unité de calcul (8) du véhicule automobile (1), dans lequel au moins une valeur caractéristique d'intensité de la réaction côté conducteur est déterminée au moyen de l'unité de calcul (8) et l'attribution de la réaction côté conducteur à l'une parmi au moins deux classes d'intensité est mise en œuvre en fonction de l'au moins une valeur caractéristique d'intensité et une intensité de freinage d'une manœuvre de freinage d'un conducteur et/ou une intensité d'accélération d'une manœuvre d'accélération envisagée du conducteur est déterminée au moyen de l'unité de calcul (8) afin de déterminer la valeur caractéristique d'intensité ;
- au moyen d'une unité de commande (9) du véhicule automobile (1)
- une intervention opposée à la réaction côté conducteur est effectuée dans une commande de véhicule lorsque la réaction côté conducteur a été attribuée à une première classe d'intensité parmi les au moins deux classes d'intensité ; et
- une intervention assistant la réaction côté conducteur est effectuée dans la commande de véhicule lorsque la réaction côté conducteur a été attribuée à une deuxième classe d'intensité parmi les au moins deux classes d'intensité.

2. Procédé selon la revendication 1,
**caractérisé en ce que**
aucune intervention n'est effectuée dans la commande de véhicule au moyen de l'unité de commande (9) lorsque la réaction côté conducteur a été attribuée à une troisième classe d'intensité parmi les au moins deux classes d'intensité.

3. Procédé selon la revendication 2,
**caractérisé en ce que**
un signal d'avertissement est émis au moyen de l'unité de commande (9) lorsque la réaction côté conducteur a été attribuée à la troisième classe d'intensité.

4. Procédé selon l'une des revendications 1 à 3,
**caractérisé en ce que**
une intervention de freinage de roue unique est effectuée sur la roue se trouvant dans l'accotement (4) en tant qu'intervention opposée à la réaction côté conducteur au moyen de l'unité de commande (9) lorsque la réaction côté conducteur a été attribuée à la première classe d'intensité.

5. Procédé selon l'une des revendications 1 à 4,
**caractérisé en ce qu'**une intervention de direction est effectuée dans une direction vers l'accotement (4) en tant qu'intervention opposée à la réaction côté conducteur au moyen de l'unité de commande (9) lorsque la réaction côté conducteur a été attribuée à la première classe d'intensité.

6. Procédé selon l'une des revendications 1 à 5,
**caractérisé en ce que**
une intervention de freinage de roue unique est effectuée sur une autre roue du véhicule automobile (1), laquelle ne se trouve pas dans l'accotement (4), en tant qu'intervention soutenant la réaction côté conducteur au moyen de l'unité de commande (9) lorsque la réaction côté conducteur a été attribuée à la deuxième classe d'intensité.

7. Procédé selon l'une des revendications 1 à 6,
**caractérisé en ce que**
une intervention de direction est effectuée dans une direction s'éloignant de l'accotement (4) en tant qu'intervention soutenant la réaction côté conducteur au moyen de l'unité de commande (9) lorsque la réaction côté conducteur a été attribuée à la deuxième classe d'intensité.

8. Système permettant de mettre fin à une conduite sur accotement d'un véhicule automobile (1), dans lequel le système (5)
- comprend une unité de détection (6) configurée pour détecter lorsqu'une roue du véhicule automobile (1) se trouve dans un accotement (4) ; et
- comprend une unité formant capteur (7) configurée pour capter une réaction côté conducteur ;
- **caractérisé en ce que** le système comprend une
unité de calcul (8) configurée pour attribuer la réaction côté conducteur à l'une parmi au moins deux classes d'intensité, dans lequel l'unité de calcul (8) est configurée pour déterminer au moins une valeur caractéristique d'intensité de la réaction côté conducteur et pour mettre en œuvre l'attribution de la réaction côté conducteur à l'une parmi au moins deux classes d'intensité en fonction de l'au moins une valeur caractéristique d'intensité et pour déterminer une intensité de freinage d'une manœuvre de freinage d'un conducteur et/ou une intensité d'accélération d'une manœuvre d'accélération envisagée du conducteur afin de déterminer la valeur caractéristique d'intensité ; et
- comprend une unité de commande (9) configurée pour
- provoquer une intervention opposée à la réaction côté conducteur dans une commande de véhicule lorsque la réaction côté conducteur a été attribuée à une première classe d'intensité parmi les au moins deux classes d'intensité ; et
- provoquer une intervention assistant la réaction côté conducteur dans la commande de véhicule lorsque la réaction côté conducteur a été attribuée à une deuxième classe d'intensité parmi les au moins deux classes d'intensité.

9. Programme informatique comportant des instructions qui, lorsque le programme informatique est exécuté par un système (5) selon la revendication 8, en particulier par une unité de calcul (8) d'un système (5), amènent le système (5) à mettre en œuvre un procédé selon l'une des revendications 1 à 7.
